# EUROPEAN PATENT SPECIFICATION

(11) **EP 4 469 727 B1**
(45) Date of publication and mention of the grant of the patent: **15.07.2026**
(21) Application number: 22942880.0
(22) Date of filing: 24.01.2022
(51) Int. Cl.: F24C 3/10, F16B 21/09

(54) **GAS HOB WITH A SPARK TRANSFORMER**
GASKOCHFELD MIT EINEM ZÜNDTRANSFORMATOR
PLAQUE DE CUISSON À GAZ DOTÉE D'UNE UNITÉ D'ALLUMAGE

(43) Date of publication of application: 04.12.2024
(73) Proprietor: Mamur Teknoloji Sistemleri San. A.S., 34590 Silivri/Istanbul (TR)
(72) Inventor: KILIC, Turgay, 34590 Silivri/Istanbul (TR); KIRANLIOGLU, Birant Ali, 34590 Silivri/Istanbul (TR); GERCEK, Eray, 34590 Silivri/Istanbul (TR); KIZILKAYA, Mustafa Atahan, 34590 Silivri/Istanbul (TR)
(74) Representative: Soylu, Ekrem
(86) International application number: PCT/TR2022/050056
(87) International publication number: WO 2023/224569

(56) References cited:
- EP-A2- 1 840 472
- WO-A1-2021/005548
- WO-A1-2021/230828
- CN-U- 205 747 012
- DE-A1- 10 232 000
- ES-A1- 2 188 332
- GB-A- 2 083 187
- JP-A- H0 921 537
- US-A- 3 253 811
- US-A1- 2016 069 571
- US-A1- 2017 138 607
- US-A1- 2020 124 289

## Description

### TECHNICAL FIELD

The invention relates to a gas hob including a spark transformer angularly positioned in a positioning area.

### STATE OF THE ART

In the literature, a spark transformer on gas hobs can be positioned on a flat plate. In current situations, the flat positioning of the spark transformer causes difficulty in assembly, ergonomic discomfort when attaching transformer terminals, and occasionally injury. There is a need for a gas hob in which assembly of the spark transformer is facilitated and terminals are attached ergonomically.

ES2190773 relates to a gas hob. At least one plug connection, such as a grounding connection, is electrically connected to the lower plate via a releasable terminal connection. Thus, the releasable terminal connection has a contact area that is integrated with the connection terminal that is in electrical contact with the lower plate of the gas cell.

CN 205747012 U discloses a gas stove with an igniter assembly connected to a bottom case.

### BRIEF DESCRIPTION OF THE INVENTION

The object of the invention is to provide a gas hob in which the spark transformer is angularly positioned in the lower housing, making assembly easier and the terminals can be attached ergonomically.

The invention describes a gas hob that includes a positioning area on a connection surface of a lower housing, configured to provide a linear surface between a first point and a second point; a positioning slot provided on the positioning area; and a spark transformer that is buffered to the positioning slot with a holder head and provides ignition through electrical triggering. The invention includes an elevation difference between the first and second points of the positioning area to allow angular positioning of the spark transformer. Thus, the spark transformer is mounted to the lower housing with angular positioning due to the elevation difference. Additionally, the angular positioning enables ergonomic attachment of the terminals. Here, the second point is higher than the first point. In other words, the linear surface of the positioning area is set at a predetermined angular value with the horizontal axis (y) in the coordinate system, so that it is in the first quadrant. Consequently, the terminal ends face the yz-plane with angular positioning.

A preferred embodiment of the invention includes a circular first hole in the positioning slot, where the holder head is placed. Thus, the spark transformer is first cushioned into the first hole with the holder head.

A preferred embodiment of the invention includes a circular second hole in the positioning slot, connected to the first hole and allowing the holder head to be secured. In this way, the spark transformer placed in the first hole with the holder head can be pushed towards the narrower second hole.

A preferred embodiment of the invention includes a ridge between the first and second holes in the positioning slot, allowing the holder head lines to pass through the ridge. Thus, after the spark transformer placed in the first hole with the holder head is pushed towards the narrower second hole, it is secured to the second hole by passing through the ridge line. Additionally, the structure of the positioning slot facilitates mounting the spark transformer to the lower housing with angular positioning.

A preferred embodiment of the invention is that the holder head is made of plastic or metal material with a predetermined heat resistance. This ensures that the holder head has a durable structure against the heat generated in the gas hob, allowing for long-lasting use.

A preferred embodiment of the invention includes one or more terminals that provide electrical transmission for ignition in the gas hob, originating from the grounded tips on the front surface of the igniter unit. Thus, electrical triggering can be performed to provide ignition in the gas hob.

A preferred embodiment of the invention includes one or more fixing holes to enable the mounting of the spark transformer to the gas hob. In this way, the spark transformer can be prevented from coming out of the positioning slot in a possible situation by mounting it to the gas hob through the fixing holes.

A preferred embodiment of the invention provides a linear height difference between the connection surface and the burner area on the gas hob. This ensures that the positioning area also has a height difference with respect to the connection surface.

### BRIEF DESCRIPTION OF THE DRAWINGS

Figure 1 is a side perspective view of the gas hob according to the invention.
Figure 2 is a top perspective view of the gas hob according to the invention.
Figure 3 is a continuation of the top perspective view of the gas hob according to the invention.

### DETAILED DESCRIPTION OF THE INVENTION

In this detailed description, the subject matter of the invention is described without any limitations and only with references to examples for a better understanding of the subject matter.

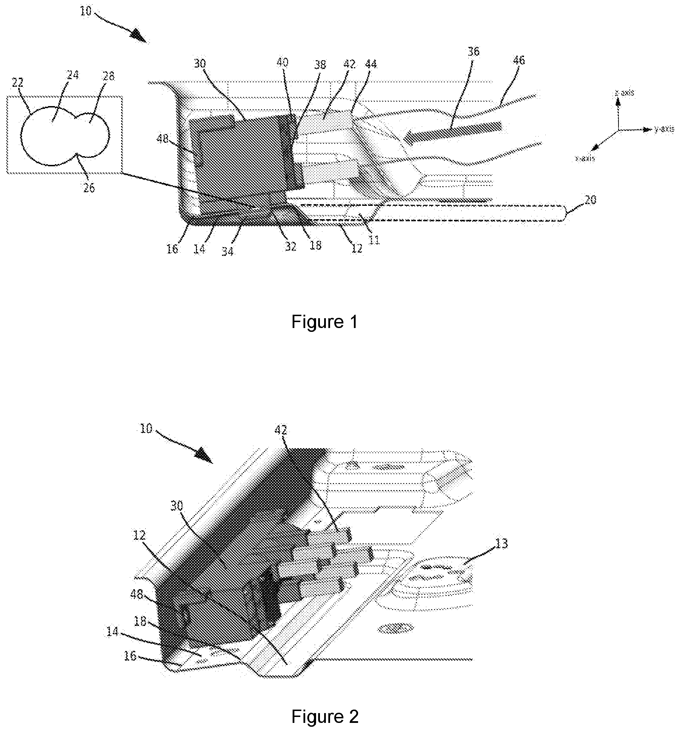

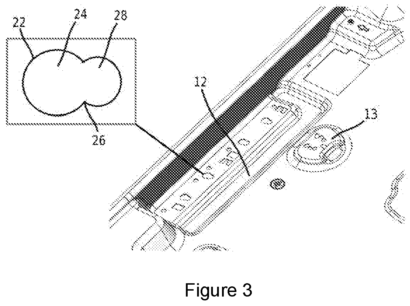

Figure 1 shows a side perspective view of the gas hob according to the invention. Figures 2 and 3 show a top perspective view of the gas hob according to the invention. On an inner surface of the gas hob (10), there is a lower housing (11). On the lower housing (11), there is a burner area (13) with a burner opening where the gas outlet for providing heat is located. There is a connection surface (12) that is lower than the burner area (13) in the lower housing (11) and ensures a predetermined linear height difference with the burner area (13) in a horizontal axis. On the connection surface (12), there is a positioning area (14) which is a flat area at an elevation. Thus, there is also a height difference between the positioning area (14) and the connection surface (12). Additionally, a linear surface is provided between a first point (16) and a second point (18) on the positioning area (14). Here, a positioning slot (22) is provided on the surface of the positioning area (14). The positioning slot (22) is designed to position an igniter unit (30). In the invention, an elevation difference (20) is provided between the first point (16) and the second point (18) of the positioning area (14). Therefore, the spark transformer (30) can be angularly positioned due to the elevation difference (20) provided between the positioning area (14) and the connection surface (12) of the lower housing (11). A holder head (32) is located on the spark transformer for placing the spark transformer (30) into the positioning slot (22). The holder head (32) is made of plastic or metal material with a predetermined heat resistance to ensure that it has a durable structure against the heat generated in the gas hob (10). For example, it can be a plastic holder head (32). There is one or more lines (34) on the holder cap (32). These lines (34) of the holder head are designed as movement channels, allowing the head (32) to move forward and backward along the horizontal axis (y) within the positioning slot (32). The spark transformer (30) also performs electrical transmission for electrical triggering to ignite a lighter (not shown in the figures) in the gas hob (10). Here, the spark transformer (30) is a lighter transformer. In the invention, there is a circular first hole (24) where the holder head (32) is placed into the positioning slot (22). Thus, the spark transformer (30) can be initially placed into the first hole (24) with the holder head (32).

Additionally, there is a second hole (28) connected to the first hole (24). The first hole (24) has a larger circular space compared to the second hole (28). The spark transformer (30), placed from the holder head (32), is pushed towards the narrower second hole (28). During this pushing, the holder head (32) passes through a node (26) between the first hole (24) and the second hole (28). The node (26) provides a latch passage between the lines (34) of the holder head. Thus, after the spark transformer (30), which is placed in the first hole (24) with the holder head (32), is pushed towards the narrower second hole, it can be secured within the second hole (28) by passing through the node line (26). In this case, not only is the angular positioning of the spark transformer (igniter unit) (30) to the lower housing (11) achieved, but also the ease of assembly is provided thanks to the structure of the positioning slot (22). Here, in Figure 1, an attachment position (36) of the spark transformer (30) for mounting into the positioning slot (22) is shown. The spark transformer (30) has an insulating front surface (38). On the front surface (38), there is one or more grounded tips (40). In the gas hob according to the invention, preferably six grounded tips (40) are present. Each grounded tip (40) has a terminal (42) that provides electrical transmission for ignition in the gas hob (10). Thus, electrical triggering is performed for the ignition of the gas hob (10). For the terminals (42) to provide electrical triggering, a terminal cable (46) is connected to the end (44) of each terminal. The terminal cable (46) is connected to the gas hob's (10) spark generator. The ergonomic attachment of the terminals (42) is also possible due to the angular positioning provided by the elevation difference (20).

In the gas hob according to the invention, by ensuring that the second point (18) is higher than the first point (16), the terminal ends (44) face the yz-plane at a predetermined angle in the horizontal axis (y) through angular positioning. Furthermore, to secure the spark transformer (30) to the gas hob (10) and prevent the spark transformer (30) from coming out of the positioning slot (22), one or more fixing holes (48) are located on the spark transformer (30). Here, in the gas hob according to the invention, there are four fixing holes (48), and the spark transformer (30) is secured to the gas hob (10) by screwing through the fixing holes (48).

**REFERENCE NUMBERS**

| | | | |
|---|---|---|---|
| 10 | Gas hob | 28 | Second hole |
| 11 | Lower housing | 30 | Spark transformer |
| 12 | Connection surface | 32 | Holder head |
| 13 | Burner area | 34 | Cap lines |
| 14 | Positioning area | 36 | Attachment position |
| 16 | First point | 38 | Front surface |
| 18 | Second point | 40 | Grounded tips |
| 20 | Elevation difference | 42 | Terminal |
| 22 | Positioning slot | 44 | Terminal end |
| 24 | First hole | 46 | Terminal cable |
| 26 | Ridge | 48 | Fixing hole |

## Claims

1. A gas hob comprising a positioning area (14) configured to provide a linear surface between a first point (16) and a second point (18) on a connection surface (12) of a lower housing (11), a positioning slot (22) provided on the positioning area (14), and a spark transformer (30) that is buffered to the positioning slot (22) with a holder head (32) and triggers electrical ignition, **characterized in that** the positioning area (14) comprises an elevation difference (20) between the first point (16) and the second point (18) that enables angular positioning of the spark transformer (30) with respect to a horizontal axis (y).

2. The gas hob according to claim 1, wherein the positioning slot (22) comprises a circular first hole (24) where the holder head (32) is placed.

3. The gas hob according to claim 2, wherein the positioning slot (22) comprises a circular second hole (28) connected to the first hole (24) and providing fixation of the holder head (32).

4. The gas hob according to claim 3, wherein the positioning slot (22) is configured to include a node (26) providing a clip passageway between the lines (34) of the holder head (32) and located between the first hole (24) and the second hole (28).

5. The gas hob according to any one of the previous claims, wherein the holder head (32) is made of plastic or metal material with a predetermined heat resistance.

6. The gas hob according to any one of the previous claims, wherein the igniter unit (30) comprises one or more terminals (42) providing electrical conduction for triggering ignition in the gas hob (10), emerging from grounded tips (40) on a front surface (38) of the spark transformer (30).

7. The gas hob according to any one of the previous claims, wherein the spark transformer (30) comprises one or more fixation holes (48) enabling its attachment to the gas hob (10).

8. The gas hob according to any one of the previous claims, wherein the gas hob (10) is configured to provide a linear height difference between a burner area (13) on the connection surface (12) and the lower housing (11).

## Patentansprüche

1. Ein Gaskochfeld, umfassend einen Positionierungsbereich (14), der so konfiguriert ist, dass er eine lineare Oberfläche zwischen einem ersten Punkt (16) und einem zweiten Punkt (18) auf einer Verbindungsfläche (12) eines unteren Gehäuses (11) bereitstellt, einen Positionierungsschlitz (22), der auf dem Positionierungsbereich (14) bereitgestellt ist, und einen Zündtransformator (30), der mit einem Halterkopf (32) an den Positionierungsschlitz (22) gepuffert ist und eine elektrische Zündung auslöst, **dadurch gekennzeichnet, dass** der Positionierungsbereich (14) einen Höhenunterschied (20) zwischen dem ersten Punkt (16) und dem zweiten Punkt (18) umfasst, der eine winkelige Positionierung des Zündtransformators (30) in Bezug auf eine horizontale Achse (y) ermöglicht.

2. Das Gaskochfeld nach Anspruch 1, wobei der Positionierungsschlitz (22) ein kreisförmiges erstes Loch (24) umfasst, in dem der Halterkopf (32) platziert ist.

3. Das Gaskochfeld nach Anspruch 2, wobei der Positionierungsschlitz (22) ein kreisförmiges zweites Loch (28) umfasst, das mit dem ersten Loch (24) verbunden ist und eine Fixierung des Halterkopfs (32) bereitstellt.

4. Das Gaskochfeld nach Anspruch 3, wobei der Positionierungsschlitz (22) so konfiguriert ist, dass er einen Knoten (26) aufweist, der einen Clip-Durchgang zwischen den Linien (34) des Halterkopfs (32) bereitstellt und sich zwischen dem ersten Loch (24) und dem zweiten Loch (28) befindet.

5. Das Gaskochfeld nach einem der vorhergehenden Ansprüche, wobei der Halterkopf (32) aus Kunststoff- oder Metallmaterial mit einer vorbestimmten Hitzebeständigkeit hergestellt ist.

6. Das Gaskochfeld nach einem der vorhergehenden Ansprüche, wobei die Zündereinheit (30) einen oder mehrere Anschlüsse (42) umfasst, die eine elektrische Leitung zum Auslösen der Zündung im Gaskochfeld (10) bereitstellen und aus geerdeten Spitzen (40) auf einer Vorderseite (38) des Zündtransformators (30) hervorgehen.

7. Das Gaskochfeld nach einem der vorhergehenden Ansprüche, wobei der Zündtransformator (30) ein oder mehrere Befestigungslöcher (48) umfasst, die seine Befestigung am Gaskochfeld (10) ermöglichen.

8. Das Gaskochfeld nach einem der vorhergehenden Ansprüche, wobei das Gaskochfeld (10) so konfiguriert ist, dass es einen linearen Höhenunterschied zwischen einem Brennerbereich (13) auf der Verbindungsfläche (12) und dem unteren Gehäuse (11) bereitstellt.

## Revendications

1. Une table de cuisson à gaz comprenant une zone de positionnement (14) configurée pour fournir une surface linéaire entre un premier point (16) et un second point (18) sur une surface de raccordement (12) d'un boîtier inférieur (11), une fente de positionnement (22) prévue sur la zone de positionnement (14), et un transformateur d'allumage (30) qui est tamponné sur la fente de positionnement (22) avec une tête de support (32) et déclenche un allumage électrique, **caractérisée en ce que** la zone de positionnement (14) comprend une différence d'élévation (20) entre le premier point (16) et le second point (18) qui permet un positionnement angulaire du transformateur d'allumage (30) par rapport à un axe horizontal (y).

2. La table de cuisson à gaz selon la revendication 1, dans laquelle la fente de positionnement (22) comprend un premier trou circulaire (24) où la tête de support (32) est placée.

3. La table de cuisson à gaz selon la revendication 2, dans laquelle la fente de positionnement (22) comprend un second trou circulaire (28) connecté au premier trou (24) et assurant la fixation de la tête de support (32).

4. La table de cuisson à gaz selon la revendication 3, dans laquelle la fente de positionnement (22) est configurée pour inclure un noeud (26) fournissant un passage de clip entre les lignes (34) de la tête de support (32) et situé entre le premier trou (24) et le second trou (28).

5. La table de cuisson à gaz selon l'une quelconque des revendications précédentes, dans laquelle la tête de support (32) est faite de matière plastique ou métallique avec une résistance à la chaleur prédéterminée.

6. La table de cuisson à gaz selon l'une quelconque des revendications précédentes, dans laquelle l'unité d'allumeur (30) comprend une ou plusieurs bornes (42) fournissant une conduction électrique pour déclencher l'allumage dans la table de cuisson à gaz (10), émergeant de pointes mises à la terre (40) sur une surface avant (38) du transformateur d'allumage (30).

7. La table de cuisson à gaz selon l'une quelconque des revendications précédentes, dans laquelle le transformateur d'allumage (30) comprises un ou plusieurs trous de fixation (48) permettant sa fixation à la table de cuisson à gaz (10).

8. La table de cuisson à gaz selon l'une quelconque des revendications précédentes, dans laquelle la table de cuisson à gaz (10) est configurée pour fournir une différence de hauteur linéaire entre une zone de brûleur (13) sur la surface de raccordement (12) et le boîtier inférieur (11).
